## Europäisches Patentamt
## European Patent Office
## Office européen des brevets

(11) Veröffentlichungsnummer: **0 106 181**
**B1**

(12) # EUROPÄISCHE PATENTSCHRIFT

(45) Veröffentlichungstag der Patentschrift:
09.08.89

(51) Int. Cl.⁴: **G 01 B 7/00**

(21) Anmeldenummer: 83109215.0

(22) Anmeldetag: 17.09.83

(54) Prüfverfahren zur Ermittlung der Genauigkeit von Werkzeugmaschinen und Anordnung zur Durchführung des Verfahrens.

(30) Priorität: 20.09.82 CH 5538/82

(43) Veröffentlichungstag der Anmeldung:
25.04.84 Patentblatt 84/17

(45) Bekanntmachung des Hinweises auf die Patenterteilung: 09.08.89 Patentblatt 89/32

(84) Benannte Vertragsstaaten:
AT BE CH DE FR GB IT LI LU NL SE

(56) Entgegenhaltungen:
GB—A— 929 943
US—A— 3 400 463
US—A— 4 429 464
IBM Technical Disclosure Bulletin, Band 12, no. 12, Mai 1970, pp. 2332-2333, NEW YORK (US), W.A. PICKER et al.: "Precision measurements"
MECANIQUE MATERIEUX ELECTRICITE, Band 55, no. 279, März 1973, pp. 23-29, C. SAULGEOT: "Etalon de circularité"
CONTROL, no. 56, Februar 1963, pp. 71-76, H.J. ELTON et al.: "A numerically controlled measuring machine"
JOURNAL OF PHYSICS E SCIENTIFIC INSTRU-MENTS, Band 9, no. 7, Juli 1976, pp. 537-544, D.G. CHETWYND et al.: "Improving the accuray of round-ness measurement"
ZEISS INFORMATIONEN, Band 21, no. 83, November 1974, pp. 36-40, OBERKOCHEN/WÜRTT. (DE), K. HERZOG: "Universalmessmaschine UMM 500"

(73) Patentinhaber: MESELTRON S.A.
Avenue Beauregard 14/18
CH-2035 Corcelles (CH)

(72) Erfinder: Knapp, Wolfgang
Turbinenstrasse 14
CH-8005 Zürich (CH)
Erfinder: Hrovat, Stojan
Trottenstrasse 79
CH-8037 Zürich (CH)

(74) Vertreter: EGLI-EUROPEAN PATENT ATTORNEYS
Horneggstrasse 4
CH-8008 Zürich (CH)

EP 0 106 181 B1

## Beschreibung

Die Erfindung liegt auf dem Gebiet der geometrischen Messtechnik zur Messung der Abweichungen von Maschinen, insbesondere für Abnahmeprüfungen von Werkzeugmaschinen, und bezieht sich auf ein Messverfahren zur Ermittlung der Geometriefehler, beispielsweise der Positionsunsicherheit, von numerisch gesteuerten Werkzeugmaschinen oder Messmaschinen.

In Journal of Physics E Scientific Instruments 9/7(07/1976)537-544 beschreiben. D.G. Chetwynd und G.J. Siddall ein Messverfahren zur Ermittlung der Geometriefehler einer Spindel und/oder eines Werkstücks in einer numerisch gesteuerten Messmaschine unter Verwendung eines in einer Bewegungsebene der Maschine ausgerichteten Normals von kreisförmigem Querschnitt (eine optisch polierte Glashalbkugel). Der Abtaster ist in einer zur Bewegungsebene parallelen Auslenkungsrichtung empfindlich und wird um das Normal bewegt, wobei die Auslenkung in radialer Richtung des Normals erfolgt. Die Auslenkung wird in ein elektrisches Signal umgesetzt, das nach Verstärkung direkt auf einem Schreiber in Abhängigkeit von der radialen Position des Abtasters am Normal aufgezeichnet wird, so dass die Geometriefehler der Spindel und/oder des Werkstücks als Abweichungen von einer Kreisform ercheinen. Dabei erfolgt die Aufzeichnung in polaren Koordinaten auf einem Polar-Schreiber. Die relative Bewegung von Abtaster und Normal während der Messung kommt durch Drehung des Abtasters mit der Spindel der Maschine zustande und der Abtaster wird in der Bewegungsebene entlang eines als Sollkreisbahn zur Fehlerbestimmung dienenden, auf der Achse des Normals zentrierten Hilfskreises geführt, was dem Abtaster eine Sollauslenkung vorgibt.

Gleichartige Messverfahren sind in US-A-3400463 und von W.A. Picker und H. Wenzel in IBM Technical Disclosure Bulletin 12/12 (05/1970) 2332-2333 beschrieben.

Weil der Abtaster bei diesen Verfahren nur in einer Auslenkungsrichtung empfindlich ist, sind solche Verfahren zur Messung der Geometriefehler einer Spindel und/oder eines Werkstücks in polaren Koordinaten bei Drehbewegungen der Spindel bestimmt. Vom Prinzip her erlauben diese Verfahren nicht, Geometriefehler von numerisch gesteuerten Werkzeugmaschinen oder Messmaschinen in kartesischen Koordinaten bei reiner Translation des Werkstücks oder Werkzeugs in X- und/oder Y-Richtung zu messen.

In Control 56(02/1963)71-75 beschreiben H.J. Elton und F.E. Munroe ein Messverfahren zur Ermittlung der Geometriefehler von numerisch gesteuerten Werkzeugmaschinen oder Messmaschinen unter Verwendung eines in einer Bewegungsebene der Maschine ausgerichteten Normals von kreisförmigem Querschnitt. Der Abtaster ist in allen zur Bewegungsebene parallelen Auslenkungsrichtungen (sowie in Höhenrichtung) gleich empfindlich und wird um das Normal bewegt, wobei die Auslenkung in radialer Richtung des Normals erfolgt. Der Abtaster wird entlang eines als Sollkreisbahn zur Fehlerbestimmung dienenden, auf der Achse des Normals zentrierten Hilfskreises geführt, was dem Abtaster eine Sollauslenkung vorgibt. Dabei erfolgt die Auslenkung in radialer Richtung sowohl der Spindel als auch des Normals. Die Auslenkung wird in ein elektrisches Signal umgesetzt, das nach Verstärkung direkt auf einem Schreiber in Abhängigkeit von der radialen Position des Abtasters am Normal aufgezeichnet wird, so dass die Geometriefehler als Abweichungen von einer Sollgeraden erscheinen.

Ein solches Verfahren ist zur Messung der erwähnten Geometriefehler verwendbar, kommt aber nicht ohne gesonderte Bestimmung der Position des Abtasters am Umfang des Normals aus, weil der Abtaster in allen Messrichtungen gleich empfindlich ist. Die Position des Abtasters kann jedoch nicht rechnerisch bestimmt werden, weil die zu messenden Fehler in die Positionsbestimmung eingehen würden. Ein Kreisnormal kann man daher nur mit Hilfe der Drehung einer Spindel abtasten, deren Position ermittelt wird. Folglich erlaubt dieses Verfahren von seinem Prinzip her nicht, Geometriefehler und beispielsweise die Positionsunsicherheit von numerisch gesteuerten Werkzeugmaschinen oder Messmaschinen in kartesischen Koordinaten bei reiner Translation des Abtasters in X- und/oder Y-Richtung zu messen.

Werkzeugmaschinen werden vor ihrer ersten Inbetriebnahme und nach dieser in periodischen Zeitabständen auf ihre realen Betriebswerte und auf ihre aktuelle geometrische Genauigkeit mittels normierter und damit untereinander vergleichbarer Messverfahren geprüft. Die dazu verwendeten Abnahme- und Kontrollmethoden bspw. für die geometrische Genauigkeit sind in Form von Mess- und Prüfvorschriften festgelegt. Diese Vorschriften haben verbindlichen Charakter und dienen zur Vereinheitlichung des messtechnischen Vorgehens, insbesondere der sinnvollen Vergleichbarkeit von Messresultaten aus verschiedenen Quellen. Es sei in diesem Zusammenhang bspw. auf die deutsche Vornorm DIN 8601 « Abnahmebedingungen für Werkzeugmaschinen für die spanende Bearbeitung von Metallen » hingewiesen, oder auf die Richtlinien des Vereins Deutscher Ingenieure VDI und der Deutsche Gesellschaft für Qualität DGQ, die in der Richtlinie Nr. 3441 die Grundlagen für die « Statistische Prüfung der Arbeits- und Positionsgenauigkeit von Werkzeugmaschinen » festlegen. Weiterhin bekannt auf diesem Gebiet ist der amerikanische National Aerospace Standard mit NAS 985 « Uniform alignement Tests » oder NAS 979 « Uniform cutting Tests » als Vorschriften insbesondere im eingangs genannten Gebiet. Der Vollständigkeit halber sei noch auf einen dritten weltweit bekanntgewordenen Standard hingewiesen, den Draft International Standard DIS der International Organization for Standardisation ISO, die im genannten Gebiet beispielsweise die Vorschrift ISO/DIS 3070/0 « Test conditions for boring and milling machines with horizontal spindle-Testing the accuracy (General introduction) » herausgibt.

Diese zum Stand der Technik des eingangs erwähnten Gebiets gehörenden Methoden zur Ermittlung der IST-Zustände von Werkzeugmaschinen verwenden eine ganze Anzahl diverser Vorschriften, von denen zur Maschinenabnahme und zur Kontrolle für geometrische Genauigkeit folgende üblicherweise verwendet werden :

Messen der einzelnen Maschinenkomponenten bzpw. mittels Laser-Interferometern, elektronischen Wasserwaagen, Autokollimationsfernrohren etc., alles Messvorgehen, die gerätetechnisch wie auch messtechnisch sehr aufwendig sind. Auch ist auf diesem Wege nicht ohne weiteres eine Aussage über das räumliche Fehlfeld als Folge aller vorhandenen Komponentenfehler der Werkzeugmaschine möglich, da bis heute rein messtechnisch nocht nicht alle Komponentenfehler gleichzeitig gemessen werden können.

Fertigen von Prüfwerkstücken auf der zu testenden Werkzeugmaschine und anschliessendes Ausmessen des Prüfwerkstückes auf einer Messmaschine. Diese indirekte Methode erlaubt oft keine eindeutige Aussage über den Zusammenhang zwischen Fehler am Prüfwerkstück und der Ursache dieses festgestellten Fehlers ; der Rückschluss ist oft mehrdeutig. Im weiteren werden Auswirkungen der Maschine durch Materialstreuungen des Werkstück- und Werkzeugmaterials und durch den nicht immer reproduzierbaren Werkzeugzustand überlagert.

Messen von Prüfwerkstücken auf Werkzeugmaschinen, die anstelle eines Werkstückes in die Werkzeugmaschine eingespannt werden. Statt des Werkzeuges werden in mehreren Dimensionen arbeitende Taster eingesetzt und dessen Auslenkungen beim Betrieb gemessen. Eine Berechnung via die Koordinaten der Werkzeugmaschine erlaubt, Abweichungen der geometrischen Genauigkeit der Werkzeugmaschine quantitativ festzustellen. Dabei fallen die vorher geschilderten Probleme der Materialstreuung und des Werkzeugzustandes weg. Zusätzlich erschwerend ist jedoch die Korrelation der Auslenkungen am Taster mit den Koordinaten der Werkzeugmaschine ; in den meisten Fällen müssen die Koordinaten der Werkzeugmaschine manuell übernommen werden.

Hat eine Werkzeugmaschine einen oder mehrere geometrische Fehler, so erzeugt sie keine exakte Kreislinie. Die Abweichungen der Maschine von der Idealgeometrie drücken sich in Abweichungen von der Kreisform aus. Der Kreisformtest gibt eine gute Aussage über die Maschinengenauigkeit in einer Ebene. Wird bei der Messung auf der Werkzeugmaschine ein Taster verwendet, so fällt der Einfluss bzw. die Auswirkung des Fertigungsprozesses, d. h. die Wechselwirkung Material/Werkzeug weg. Allerdings bleibt das schon bei anderen Vorgehen erwähnte Problem der Uebernahme der Werkzeugmaschinenkoordinaten bestehen. Diese müssen auch in diesem Fall in der Regel äusserst zeitaufwendig manuell den Tasterkoordinaten zugeordnet werden.

Aufgabe der Erfindung ist es, ein Verfahren zu schaffen, mit dessen Hilfe Geometriefehler und beispielsweise die Positionsunsicherheit von numerisch gesteuerten Werkzeugmaschinen oder Messmaschinen in kartesischen Koordinaten bei reiner Translation des Abtasters in X- und/oder Y-Richtung schnell und einfach gemessen werden können.

Eine weitere Aufgabe der Erfindung ist es, ein Verfahren anzugeben, durch welches die Fehlermöglichkeiten bei der Messung vermindert und somit die Sicherheit der Resultate erhöht werden.

Diese Aufgabe wird gelöst durch die im Anspruch 1 angegebene Kombination von Verfahrensschritten. Vorteilhafte Weiterbildungen des Verfahrens ergeben sich aus den abhängigen Ansprüchen.

Im nachfolgenden wird nun ein Ausbildungsbeispiel der Erfindung anhand der Zeichnung erläutert. Es zeigen :

Figur 1 eine Schnittdarstellung eines zylindrischen Normals, wie es beispielsweise im erfindungsgemässen Verfahren verwendbar ist ;

Figur 2 eine Draufsicht des Normals der Fig. 1 bei einer 4-Punkt-Antastung zur Bestimmung eines Kreismittelpunktes ;

Figur 3a und 3b eine abstrahierende Darstellung einer Messanordnung zur Durchführung des erfindungsgemässen Verfahrens ;

Figur 4 ein Beispiel eines auf einer bahngesteuerten Werkzeugmaschine erhaltenen Messresultats des erfindungsgemässen Verfahrens ;

Figur 5 ein Blockschaltbild einer Messanordnung zur Durchführung des erfindungsgemässen Verfahrens.

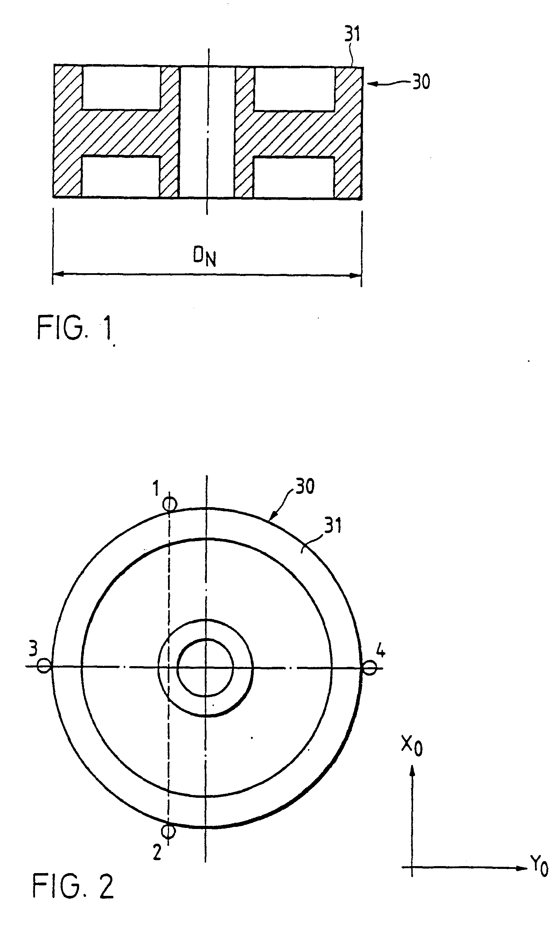

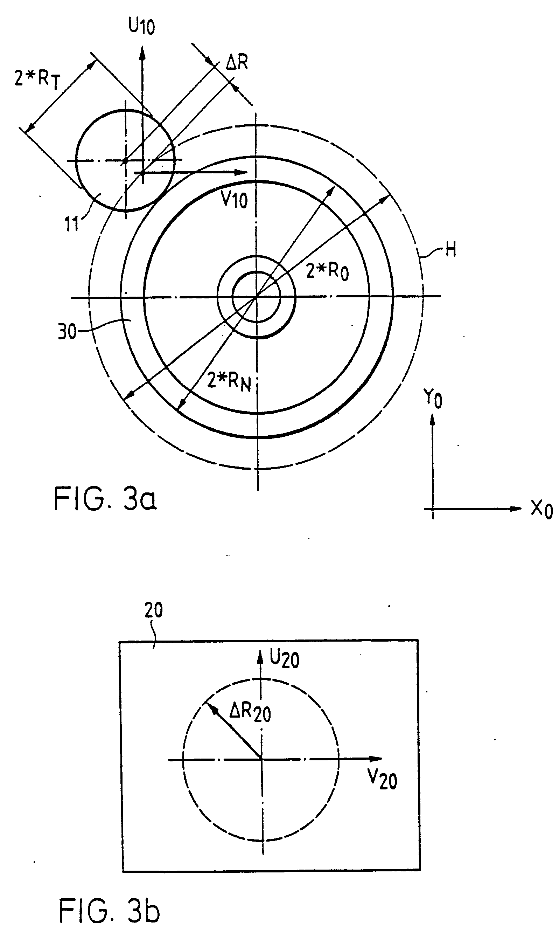

Das in den Figuren 1 und 2 dargestellte zylindrische Normal 30 weist für die Verwendung im nachfolgend aufgeführten Verfahren einen Aussendurchmesser $D_N$ auf. Zur planparallelen Ausrichtung des Normals an die Werkzeugmaschinenbewegung dient die Basisebene 31 an mindestens einer Stirnseite des Formteils. In Bezug auf dieses Normal wird gemäss Figur 3a eine Hilfskreisbahn H festgelegt: Diese Hilfskreisbahn dient als Sollbahn zur Fehlerbestimmung in einer Bewegungsebene der Werkzeugmaschine. Das zentrum des Hilfskreises wird gemäss Figur 2 durch bspw. 4 Antastungen 1 bis 4 mit einem in zwei Richtungen empfindlichen Abtaster (« 2D-Abtaster ») bestimmt. Das in derselben Figur dargestellte Koordinatenkreuz zeigt die gewählte Bewegungsebene der zu messenden Werkzeugmaschine an. Der Durchmesser des Hilfskreises H beträgt $2*R_0$, der Durchmesser des Normals $D_N = 2*R_N$, das Zentrum beider Kreise ist kongruent. Die Koordinaten von Punkten auf dem Hilfskreis H werden entweder als Daten in einem Computer gespeichert oder durch ein entsprechendes Programm während der Messung sukzessive erzeugt.

Die Figuren 3a und 3b zeigen diese Zusammenhänge erweitert um eine Tastkugel 11 und um einen Koordinatenschreiber 20 mit einem bspw. eingezeichneten Kreis mit der Auslenkung ΔR des Abtasters d. h. deren graphische Darstellung ΔR$_{20}$. In dieser Darstellung sind natürlich sämtliche mechanischen und elektrischen Verstärkungsfaktoren V$_{TOT}$ enthalten, die zusammen die graphische Magnitude bestimmen. Der Zusammenhang ist folgender :

$$\Delta R_{20} = \Delta R * V_{TOT} = (\text{bspw.}) \; \Delta_R * V_{Taster} * V_{Plotter}$$

Drei voneinander unabhängige Koordinatensystem sind zu beachten und zur Durchführung des Verfahrens miteinander zu korrelieren :

die Koordinaten der Werkzeugmaschine X$_0$, Y$_0$, Z$_0$
die Koordinaten Empfindlichkeitsrichtungen des 2D-Tasters U$_{10}$, V$_{10}$
die Koordinaten auf dem Plotter U$_{20}$, V$_{20}$

Durch die adäquate Ausrichtung des Normals auf der Werkzeugmaschine fällt die Basisebene 31 mit einer möglichen Bewegungsebene der Werkzeugmaschine zusammen, d. h. die Kreisbewegung in einer Ebene der Werkzeugmaschine wird vom Normal abgebildet und von diesem über den Tastmechanismus übernommen und elektrisch gewandelt.

Am Beispiel eines von aussen anzutastenden Normals wird das Verfahren nun in einzelnen Schritten und im Zusammenhang mit Figur 3a und 3b erläutert.

Für die zu prüfende Werkzeugmaschine wird nun eine der Hilfskreisbahn entsprechende Sollkreisbahn vom Durchmesser $\emptyset = 2*R_0$ definiert. Die in die NC-Steuerung eingegebenen Radien R$_0$ und R$_{wz}$ (Werkzeugradius) ergeben sich aus folgendem Zusammenhang :

$$R_0 = R_N + R_T - SA \; ; \; R_{Wz} = 0 \tag{1a}$$

worin R$_N$ der Radius des zylindrischen Normals, R$_T$ der Radius der Tastkugel und SA die Soll-Auslenkung der Tastkugel bedeutet.
Für von innen anzutastende Normale gilt :

$$R_0 = R_N - R_T + SA \; ; \; R_{wz} = 0 \tag{1b}$$

Mit R$_0$ = R$_N$ kann der Wert R$_{wz}$ durch

$$R_{wz} = R_T - SA \tag{2} \; \text{ermittelt werden.}$$

Die Sollauslenkung sollte etwa die Hälfte des Taster-Messbereichs und etwa das Doppelte der zu erwartenden Abweichung vom Sollkreis betragen. Dies sind Empfehlungen zur Festlegung des Hilfskreises.

Das auf die Werkzeugmaschine aufgebrachte Normal wird mit seiner Basisebene parallel zur gewünschten Bewegungsebene der Werkzeugmaschine ausgerichtet, so dass die zu erwartenden Auslenkungen in der gewünschten Bewegungsebene verlaufen.

Anstelle des Werkzeuges wird ein in zwei Richtungen empfindlicher Abtaster (« 2D-Abtaster ») auf der Maschine montiert. Die Signal-Ausgänge des Abtasters werden auf einen XY-Schreiber geführt.

Durch mehrmaliges Antasten an verschiedenen Stellen der Peripherie des zylindrischen Normals mit dem Abtaster werden die Werte zur Ermittlung des Zentrums des Kreisquerschnitts des Normals gewonnen. Der so bestimmte Mittelpunkt dient als Zentrum des Sollkreises.

Die vorbestimmte Sollkreisbahn wird nun mit der Werkzeugmaschine abgefahren, wobei der Abtaster das Normal ununterbrochen berühren soll.

Eine fehlerfreie Maschine fährt die Kreisbahn exakt ab, und der Abtaster ist dadurch in jedem Punkt des Sollkreises radial konstant mit der Sollauslenkung SA ausgelenkt. Dadurch zeichnet der Koordinatenschreiber wie in Figur 3b dargestellt einen Kreis mit der Auslenkung ΔR des Abtasters bzw. deren graphischer Darstellung ΔR$_{20}$. Die entsprechenden Verstärkungsfaktoren zwischen der tatsächlichen Auslenkung und deren graphischer Darstellung ergeben sich durch Multiplikation der einzelnen Verstärkungen :

$$\Delta_{Plot} = \Delta_{WZM} * V_{TOT} = \Delta_{WZM} * \prod_{i=1}^{n} V_i, \text{ wobei } \Delta_{WZM} = SA \pm \text{Fehler}$$

Meist dürfte n zwei bis drei betragen, nämlich die Verstärkungen des Tasters, des Koordinaten-Schreibers und eines oder keines dazwischengeschalteten Verstärkers.

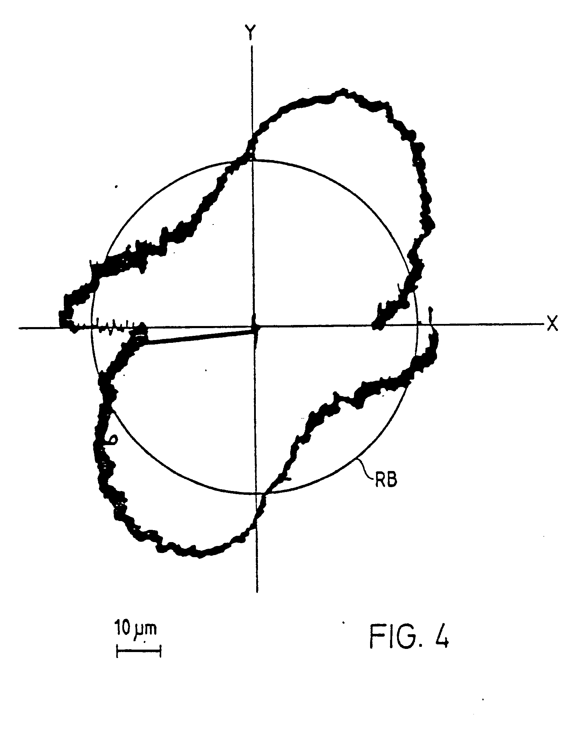

Eine fehlerbehaftete Maschine fährt die Kreisbahn nicht exakt ab und die Auslenkungen des Abtasters stimmen nicht in jedem Punkt mit der Sollauslenkung überein. Dadurch entstehen, wie in Figur 4 dargestellt. Abweichungen von der Registrierkreisbasis RB. Der Sollkreis entspricht dem Hilfskreis H ;

4

die .Registrierbasis ist ein Kreis vom Radius gleich [SA* Verstärkung] und hat keinen Zusammenhang mit dem Radius des Normals. Nach dem Abfahren des Kreises liegt das Ergebnis der Ueberprüfung unmittelbar als Protokoll aufgezeichnet vor, und zwar ohne Verwendung eines Rechners oder eines speziellen Auswertegerätes und ohne jede weitere Verbindung zur Werkzeugmaschine. Die Registrierbasis (Kreis) kann wahlweise in dasselbe Protokoll eingezeichnet werden.

Figur 4 kann nun im Sinne der Auswertung dahingehend interpretiert werden, dass sich die Positionsunsicherheit der Werkzeugmaschine als Streuung bei Wiederholung der Messung zeigt; Geometriefehler erscheinen als Formabweichungen vom Kreis, und während der Messung vorhandene Vibrationen zeigen sich durch Verrauschen der aufgezeichneten Kurve.

Die Formfehler erscheinen als elliptische IST-Kurve. Ausserdem ist an der sprunghaften Aenderung bei der X-Achse erkennbar, dass die Maschine eine Umkehrspanne in X aufweist. Durch mehrmaliges Aufzeichnen der Messergebnisse kann die Wiederholbarkeit der Maschine kontrolliert werden. Während der Messung können beispielsweise das Suchen und das Ueberfahren von Positionen direkt am XY-Schreiber erkannt werden.

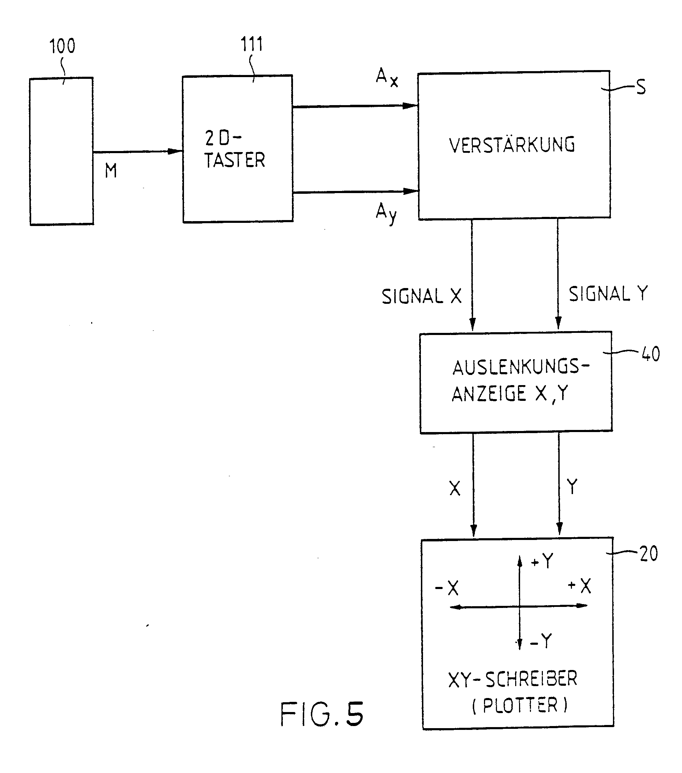

Figur 5 zeigt schliesslich ein Blockschaltbild einer Messanordnung zur Durchführung des erfindungsgemässen Verfahrens. Die mechanische Messgrösse M wird in einem Abtaster 111 mit Tastkugel 11 in ein koordinatenabhängiges elektrisches Signal $A_x$ und $A_y$ gewandelt. Die Auslenkungssignale $A_x$ und $A_y$ werden in der internen Schaltung S weiter getrennt verarbeitet und gelangen zur Auslenkungsanzeige 40 und auf einen Koordinatenschreiber 20. Dieser Schreiber ist so eingestellt, dass in der Ruhelage des Abtasters keine Auslenkung registriert wird, d. h. dass der Schreibstift im Ursprung eines 4-Quadranten-Koordinatensystems steht. Die Registrierbasis kann auf einem für den Plotter hergestellten Prüfprotokoll zusammen mit dem Koordinatenkreuz schon aufgedruckt sein. Der Nullpunkt wird am Koordinatenschreiber eingestellt und die Kreisform ausgemessen.

## Patentansprüche

1. Messverfahren zur Ermittlung der Geometriefehler, beispielsweise der Positionsunsicherheit, von numerisch gesteuerten Werkzeugmaschinen oder Messmaschinen unter Verwendung eines in einer Bewegungsebene der Maschine ausgerichteten Normals von kreisförmigem Querschnitt und eines in der Bewegungsebene um das Normal bewegten, in zwei zur Bewegungsebene parallelen Messrichtungen empfindlichen Abtasters, dessen Auslenkungen in elektrische Signale umgesetzt werden, wobei in der Bewegungsebene entlang eines Hilfskreises eine als Sollkreisbahn zur Fehlerbestimmung dienende Bahn festgelegt wird und dem Abtaster eine Sollauslenkung vorgegeben wird, wobei das Zentrum des Hilfskreises mit dem Zentrum des kreisförmigen Querschnitts des Normals kongruent ist, und die Messung vorgenommen wird indem die Sollkreisbahn von der Maschine abgefahren wird und die Auslenksignale gegebenenfalls nach Verstärkung direkt auf einem XY-Schreiber aufgezeichnet werden, so dass die Geometriefehler als Abweichungen von einer Kreisform erscheinen.

2. Messverfahren nach Anspruch 1, dadurch gekennzeichnet, dass die Koordinaten von Punkten des Hilfskreises als Daten in der NC-Steuerung der Maschine gespeichert sind.

3. Messverfahren nach Anspruch 1, dadurch gekennzeichnet, dass die Koordinaten von Punkten des Hilfskreises während der Durchführung der Messung als Daten in der NC-Steuerung der Maschine erzeugt werden.

4. Messverfahren nach Anspruch 1, dadurch gekennzeichnet, dass das Normal ein Innenzylindernormal, ein Aussenzylindernormal, ein Stufenzylindernormal, ein Kugelnormal oder ein Kegelnormal ist.

## Claims

1. A measurement method for the detection of geometry errors, for instance of the incertitude of position of numerically controlled machine tools or measuring machines, using a standard of circular cross-section oriented in a plane of movement of the machine and a sensor moved in the plane of movement around the standard, responsive in two directions of measurement parallel to the plane of movement and whose deflections are converted into electrical signals, a path being established along an auxiliary circle in the plane of movement as a reference circular path to serve for error determination and a reference deflection being preset at the sensor, the centre of the auxiliary circle being congruent with the centre of the circular cross-section of the standard, and the measurement being performed in that the reference circular path is followed by the machine and the optionally amplified deflection signals are directly recorded on an XY-recorder so that the geometry errors appear as deviations from a circular shape.

2. A measurement method according to claim 1, characterized in that the coordinates of points of the auxiliary circle are stored as data in the numerical control of the machine.

3. A measurement method according to claim 1, characterized in that the coordinates of points of the auxiliary circle are generated as data in the numerical control of the machine while the measurement is performed.

4. A method of measurement according to claim 1, characterized in that the standard is a standard with an outer cylinder surface, a standard with an inner cylinder surface, a standard with a stepped cylinder surface, a spherical standard or a conical standard.

**Revendications**

1. Procédé de mesure pour la détection des erreurs de géométrie, par exemple de l'incertitude de position, de machines-outils à commande numérique ou de machines de mesure, avec usage d'un calibre de section transversale circulaire orienté dans un plan de déplacement de la machine et d'un palpeur déplacé dans le plan de déplacement autour du calibre, sensible dans deux directions de mesure parallèles au plan de déplacement et dont les déflections sont converties en signaux électriques, un chemin étant établi le long d'un cercle auxiliaire dans le plan de déplacement en tant que chemin circulaire de consigne pour servir à la détermination des erreurs et une déflection de consigne étant imposée au palpeur, le centre du cercle auxiliaire étant congruent au centre de la section transversale circulaire du calibre, et la mesure étant effectuée en ce que le chemin circulaire de consigne est parcouru par la machine et les signaux de déflection sont après amplification éventuelle directement enregistrés sur un enregistreur XY, de sorte que les erreurs de géométrie apparaissent comme des déviations par rapport à la forme circulaire.

2. Procédé de mesure selon la revendication 1, caractérisé en ce que les coordonnées de points du cercle auxiliaire sont mises en mémoire comme données dans la commande numérique de la machine.

3. Procédé de mesure selon la revendication 1, caractérisé en ce que les coordonnées de points du cercle auxiliaire sont produites comme données dans la commande numérique de la machine pendant l'exécution de la mesure.

4. Procédé de mesure selon la revendication 1, caractérisé en ce que le calibre est un calibre à cylindre intérieur, un calibre à cylindre intérieur, un calibre à cylindre étagé, un calibre sphérique ou un calibre conique.

31

30

$D_N$

FIG. 1

1

30

31

3

4

2

$X_0$

$Y_0$

FIG. 2

1

FIG. 3a

FIG. 3b

10 µm

FIG. 4

FIG. 5